# EUROPEAN PATENT APPLICATION

(11) **EP 2 387 287 A1**
(43) Date of publication of application: **16.11.2011**
(21) Application number: 10844956.2
(22) Date of filing: 21.05.2010
(51) Int. Cl.: H04W 88/18

(54) **WIRELESS DATA CARD, METHOD AND SYSTEM FOR COMMUNICATIONG BETWEEN WIRELESS DATA CARD AND COMPUTER SIDE**

(30) Priority: 04.02.2010 CN 201010112746
(71) Applicant: ZTE Corporation, Shenzhen, Guangdong 518057 (CN)
(72) Inventor: LIAO, Zhenzhong, Shenzhen City, Guangdong Province 518057 (CN); WU, Jianning, Shenzhen City, Guangdong Province 518057 (CN)
(74) Representative: Bokinge, Ole
(86) International application number: PCT/CN2010/073068
(87) International publication number: WO 2011/094976

(57) **Abstract**

The present invention discloses a wireless data card, and a method and system for communicating between the wireless data card and computer side, and relates to communication field. The method of the present invention includes: the wireless data card installing a wireless data card driver with connection management function into a computer when the wireless data card is connected with the computer; and the computer interacting with the wireless data card through the installed wireless data card driver with the connection management function. The technical scheme of the present invention completes the interaction with the wireless data card board side controlling program in the wireless data card driver, thus avoiding the disadvantage that the wireless data cards of the different manufacturers cannot be universal due to the different connection managers.

## Description

### Technical Field

The present invention relates to communication field, particularly to a wireless data card, and a method and system for communicating between the wireless data card and computer side.

### Background of the Related Art

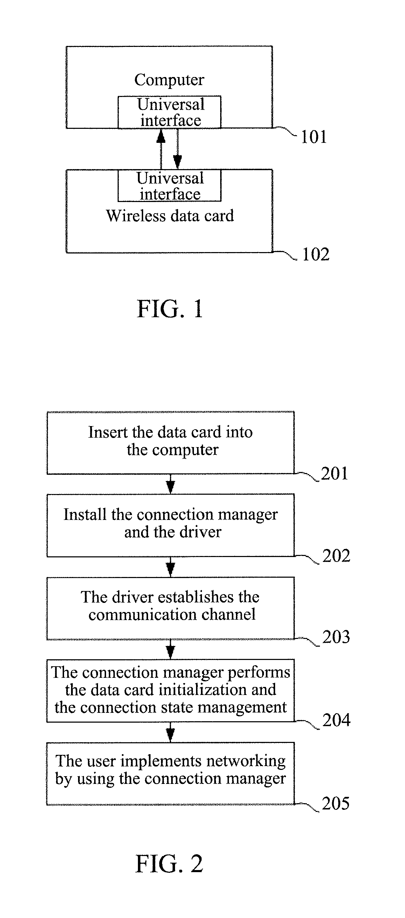

Along with the increasing development of internet technology, surfing the internet has been an important part of people's life. People can have access to the internetwork anytime, anywhere and at will by using a wireless data card. For the wireless data card now, a connection manager is generally installed on a computer, and network connection of the wireless data card is managed through the connection manager, to access the internet using the connection manager, as shown in FIG. 1.

At present, the working mode of the wireless data card, as shown in FIG. 2: Firstly, the connection manager and the wireless data card driver should be installed at the first time using the wireless data card. This process is done automatically by the wireless data card. The user firstly inserts the wireless data card into the computer when surfing the internet is needed. An operating system will call the wireless data card driver to automatically establish a communication channel between the computer and the wireless data card, and at the same time the connection manager is opened. The connection manager will initialize the wireless data card and manage connection status. Then, the user sends out an instruction for connecting to the internet through the connection manager. The connection manager sends a networking instruction to the operating system, at the same time sends the networking AT (Attention) instruction to the wireless data card board side controlling program, to establish the data link from the computer to the internet, thereby the user can access the internet.

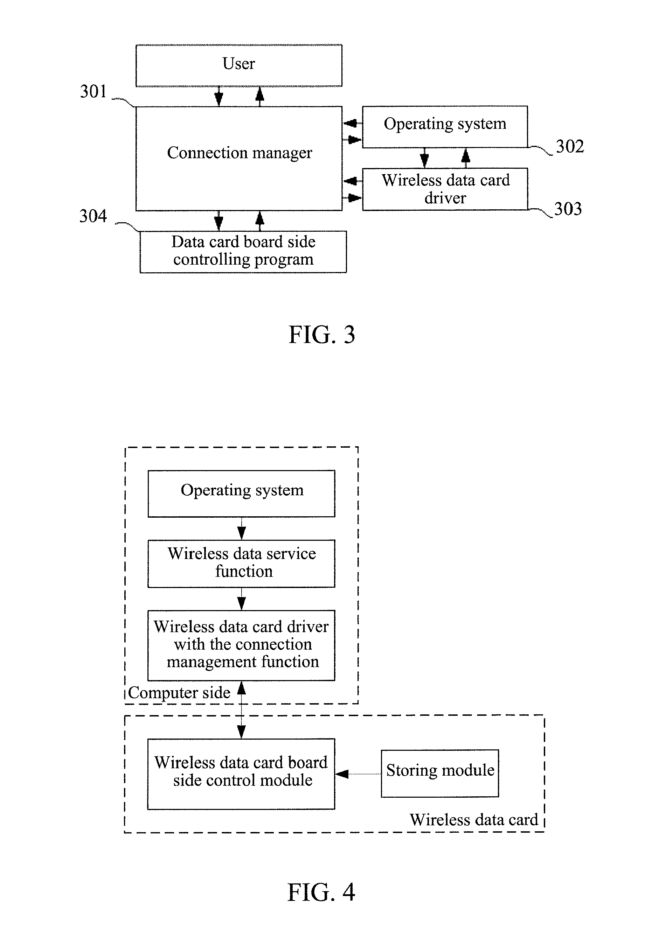

It can be seen from above that, due to assistance of the connection manager, the user can access the internet conveniently, as shown in FIG. 3, however, this working mode is provided with the following disadvantages:
Firstly, due to the connection manager is an individual program, it needs to occupy certain resources of the user's computer, such as CPU, memory, etc., so that running speed of the computer is slowed;
secondly, the wireless data card produced by each wireless data card manufacturer needs to be used together with the corresponding connection manager, resulting in the connection manager produced by one manufacturer cannot manage the wireless data card from another manufacturer, i.e. the connection managers produced by different manufacturers cannot be universal.

### Summary of the Invention

The present invention provides a wireless data card, and a method and system for communicating between the wireless data card and computer side, thereby solving the defect that the wireless data cards of the different manufacturers cannot be universal due to the different connection managers.

To solve the above problem, the present invention discloses a method for communicating between a wireless data card and a computer side, comprising:
when the wireless data card is connected with a computer, the wireless data card installing a wireless data card driver with connection management function into the computer; and
the computer interacting with the wireless data card through the installed wireless data card driver with the connection management function.

In the above described method, the step of the computer interacting with the wireless data card through the installed wireless data card driver with the connection management function may comprise:
sending a connection management operation instruction to the installed wireless data card driver with the connection management function through wireless data service function when the computer receives the connection management operation instruction sent from a user to the wireless data card; and
the wireless data card receiving the connection management operation instruction of the wireless data card sent by the wireless data card driver with the connection management function on the computer side, and performing an operation according to the received operation instruction.

The above described method further comprises the following character: when the wireless data card driver with the connection management function installed on the computer side receives the connection management operation instruction, transforming the connection management operation instruction into an AT instruction and sending to the wireless data card.

In the above described method, the step of the computer interacting with the wireless data card through the installed wireless data card driver with the connection management function may comprise:
the wireless data card sending the following one or more kinds of information to the wireless data card driver with the connection management function on the computer side: device information of the wireless data card, working state of the wireless data card, executing result of the connection management operation instruction; and
the wireless data card driver with the connection management function on the computer side sending the received information to an operating system of the computer through the wireless data service function of the computer.

In the above described method, the wireless data card and the computer can be connected through a universal interface.

The present invention further discloses a system for implementing communication between a wireless data card and a computer side, comprising the wireless data card and a computer, wherein,
the wireless data card is configured to when the wireless data card is connected with the computer, install a wireless data card driver with connection management function in the wireless data card into the computer, and interact with the computer; and
the computer is configured to interact with the wireless data card through the installed wireless data card driver with the connection management function.

In the above described system, the computer is configured to send a connection management operation instruction of the wireless data card to the wireless data card through the installed wireless data card driver with the connection management function to interact with the wireless data card; and
the wireless data card is configured to interact with the computer by the following mode: receiving the connection management operation instruction of the wireless data card sent by the computer side, and performing an operation according to the received operation instruction.

In the above described system, the computer is further configured to receive the connection management operation instruction of the wireless data card sent by a user, and send the connection management operation instruction of the wireless data card to the installed wireless data card driver with the connection management function through wireless data service function.

The present invention further discloses a wireless data card, comprising a storing module and a wireless data card board side control module, wherein,
the storing module is configured to store a wireless data card driver with connection management function; and
the wireless data card board side control module is configured to when the wireless data card is connected with a computer, install the wireless data card driver with the connection management function in the storing module into the computer, and interact with the wireless data card driver with the connection management function installed on a computer side.

In the above described wireless data card, the wireless data card board side control module may be configured to interact with the wireless data card driver with the connection management function installed on the computer side by the following mode: receiving the connection management instruction of the wireless data card sent by the wireless data card driver with the connection management function installed on the computer side, and controlling the wireless data card to perform an operation according to the received instruction.

The technical scheme of the present invention completes the interaction with the wireless data card board side controlling program in the wireless data card driver, thus avoiding the disadvantage that the wireless data cards of the different manufacturers cannot be universal due to the different connection managers. Additionally, since the technical scheme of the present invention is of integrating the connection management function into the wireless data card driver program (i.e. the present invention provides the wireless data card driver with the connection management function), the computer side does not require the individual connection management program, thereby greatly saving the resources of the computer side and improving running speed of the computer.

### Brief Description of Drawings

FIG. 1 is a hardware module diagram for connecting a wireless data card with a computer in the prior art;
FIG. 2 is a working flow chart for implementing wireless networking by a wireless data card in the prior art;
FIG. 3 is a software module diagram for implementing communication between a wireless data card and a computer side in the prior art;
FIG. 4 is a system framework diagram for implementing communication between a wireless data card and a computer side according to the present invention; and
FIG. 5 is a communicating flow chart for communicating between a wireless data card and a computer side according to the present invention.

### Preferred Embodiments of the Present Invention

The main conception of the present invention is that: considering one problem that a connection manager of a wireless data card in the prior art cannot be universal, connection management function of the wireless data card can be built in a wireless data card driver, and after the wireless data card is connected with a computer side, the wireless data card driver with the connection management function is automatically installed on the computer side by the wireless data card, and in this way, the computer doesn't need the connection manager, i.e. it can implement wireless networking using the wireless data card produced by any manufacturer.

The technical scheme of the present invention will be further described in detail below in combination with the drawings and the specific embodiments.

A system for implementing communication between the wireless data card and the computer side, as shown in FIG. 4, includes the wireless data card and the computer. The functions of each part of the system are illustrated as follows:
the wireless data card further includes a storing module and a wireless data card board side control module, wherein:
   the storing module is configured to store the wireless data card driver with the connection management function; and
   the wireless data card board side control module is configured to: when the wireless data card is connected with a computer, install the wireless data card driver with the connection management function in the storing module on the computer side, and take charge of interacting with the wireless data card driver program with the connection management function installed on the computer side, and control the hardware of the wireless data card, wherein, the interaction between the wireless data card board side control module and the wireless data card driver on the computer side includes: the wireless data card board side control module receiving various connection management instructions sent by the wireless data card driver program installed on the computer side and performing the corresponding operation according to the received connection management instruction, and wireless data card board side control module reports the information of the wireless data card, such as state and so on, to the wireless data card driver program installed on the computer side.

The computer is configured to send various connection management instructions to the wireless data card through the installed wireless data card driver with the connection management function, according to user operation;
wherein, the computer needs to have wireless data service function, and when the user initiates a connection management operation for the wireless data card, the operating system of the computer side sends the received connection management operation command to the wireless data card driver with the connection management function installed on the computer side through the wireless data service function, and then the wireless data card driver transforms the connection management command into an AT instruction and forwards to the wireless data card.

The working process of the above-mentioned wireless data card is illustrated as follows.

When the wireless data card is used for the first time, the wireless data card driver with the connection management function is installed automatically on the computer side by the wireless data card, and device information of the wireless data card is reported to the computer side. The wireless data card driver with the connection management function installed on the computer side will identify the wireless data card according to the device information reported by the wireless data card, and establish a communication channel from the computer to the wireless data card. This communication channel can be based on an ordinary serial communication or other communication modes. After the wireless data card driver with the connection management function has established the communication channel between the wireless data card and the computer side, the operating system of the computer side will call the wireless data service function to operate the wireless data card, i.e. to initialize the wireless data card, and to operate and search the detail information of the wireless data card, the current state of the wireless data card, etc. The wireless data service function of the computer side will forward the operation instruction to the installed wireless data card driver with the connection management function for processing, and this wireless data card driver interacts with the wireless data card by using the AT instruction which is agreed on with the wireless data card in advance, allowing the wireless data card to implement the operation.

Then, the user initiates the connection management operation for the wireless data card through the operating system of the computer side, such as, the user sends an operation command for connecting to the internet (hereafter referred to as networking instruction for short), and the operating system of the computer side, after receiving this operation command, forwards this networking instruction to the installed wireless data card driver with the connection management function through the wireless data service function. The wireless data card driver with the connection management function transforms the received networking instruction into the AT instruction and sends to the wireless data card. The wireless data card controls the wireless data card hardware to connect to the internet according to the AT instruction, and feeds back the progress of the established connection to the wireless data card driver with the connection management function installed on the computer side. The wireless data card driver with the connection management function installed on the computer side reports the progress of the established connection through the wireless data service function of the computer side. The operating system of the computer side searches the progress and updates the interface display of the wireless data card connection management through the wireless data service function. After the data link for the computer connecting to the internet has been established, the user can access the internet.

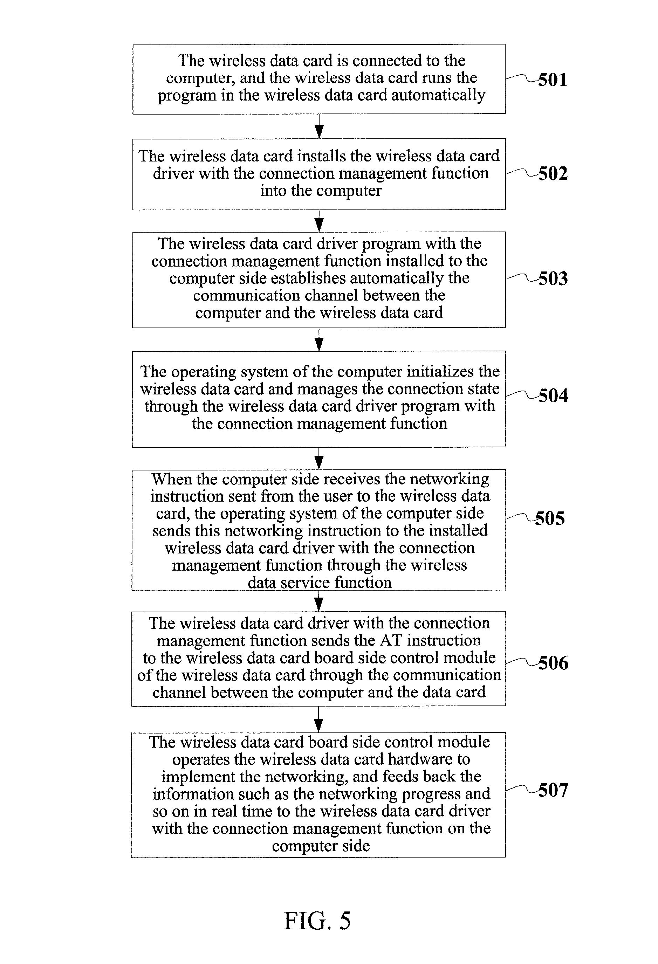

Specifically, the above-mentioned process, as shown in FIG. 5, includes the following steps:
Step 501, the wireless data card is connected to the computer, and the wireless data card runs the program in the wireless data card automatically;
in this step, the wireless data card and the computer are connected through the universal interface.
Step 502, the wireless data card installs the wireless data card driver with the connection management function into the computer;
Step 503, the wireless data card driver program with the connection management function installed on the computer side establishes automatically the communication channel between the computer and the wireless data card;
Step 504, the operating system of the computer initializes the wireless data card and manages the connection state through the wireless data card driver program with the connection management function;
in this process, the operating system of the computer sends various initialization and connection state management operation instructions to the wireless data card driver program with the connection management function by using the wireless data service function;
after this step is operated, the operating system of the computer waits for the user's networking instruction, in order to implement networking.
Step 505, when the computer side receives the networking instruction sent from the user to the wireless data card, the operating system of the computer side sends this networking instruction to the installed wireless data card driver with the connection management function through the wireless data service function;
Step 506, the wireless data card driver with the connection management function sends out the AT instruction (i.e. the networking instruction) to the wireless data card board side control module of the wireless data card through the communication channel between the computer and the data card;
Step 507, the wireless data card board side control module operates the wireless data card hardware to implement the networking, and feeds back in real time the information such as the networking progress and so on to the wireless data card driver with the connection management function on the computer side.

In other application scenarios, the computer side can also initiate the connection management operation such as scanning the internet and so on to the wireless data card through the wireless data card driver with the wireless data management function, and the wireless data card also can feed back the following one or more kinds of information to the wireless data card driver with the wireless data management function on the computer side:
the device information of the wireless data card, the working state of the wireless data card, the executing result of the connection management operation instruction, and so on.
It can be seen from the above described embodiments that, in the technical scheme of the present invention, the interaction with the wireless data card board side controlling program is done in the driver, thus avoiding the disadvantage that the wireless data cards of the different manufacturers cannot be universal due to the different connection managers.

### Industrial Applicability

Compared with the prior art, the technical scheme of the present invention is of integrating the connection management function into the wireless data card driver program (i.e. the present invention provides the wireless data card driver with the connection management function), and the computer side does not require the individual connection management program, thereby greatly saving the resources of the computer side and improving running speed of the computer.

## Claims

1. A method for communicating between a wireless data card and a computer side, comprising:
the wireless data card installing a wireless data card driver with connection management function into a computer when the wireless data card is connected with the computer; and
the computer interacting with the wireless data card through the installed wireless data card driver with the connection management function.

2. The method according to claim 1, wherein,
the step of the computer interacting with the wireless data card through the installed wireless data card driver with the connection management function comprises:
sending a connection management operation instruction to the installed wireless data card driver with the connection management function through wireless data service function when the computer receives the connection management operation instruction sent from a user to the wireless data card; and
the installed wireless data card driver with the connection management function sending the received connection management operation instruction to the wireless data card, and the wireless data card performing an operation according to the received connection management operation instruction.

3. The method according to claim 2, wherein, the step of the installed wireless data card driver with the connection management function sending the connection management operation instruction to the wireless data card comprises:
when the installed wireless data card driver with the connection management function receives the connection management operation instruction, transforming the connection management operation instruction into an AT instruction and sending the AT instruction to the wireless data card.

4. The method according to claim 1, wherein,
the step of the computer interacting with the wireless data card through the installed wireless data card driver with the connection management function comprises:
the wireless data card sending the following one or more kinds of information to the wireless data card driver with the connection management function installed on the computer side: device information of the wireless data card, working state of the wireless data card, executing result of connection management operation instruction; and
the wireless data card driver with the connection management function installed on the computer side sending the received information to an operating system of the computer through wireless data service function of the computer.

5. The method according to claim 1, wherein, connecting the wireless data card with the computer through a universal interface.

6. A system for implementing communication between a wireless data card and a computer side, comprising the wireless data card and a computer, wherein,
the wireless data card is configured to when the wireless data card is connected with the computer, install a wireless data card driver with connection management function in the wireless data card into the computer, and interact with the computer; and
the computer is configured to interact with the wireless data card through the installed wireless data card driver with the connection management function.

7. The system according to claim 6, wherein,
the computer is configured to send a connection management operation instruction of the wireless data card to the wireless data card through the installed wireless data card driver with the connection management function to interact with the wireless data card; and
the wireless data card is configured to interact with the computer by following mode: receiving the connection management operation instruction of the wireless data card sent by the computer, and performing an operation according to the received connection management operation instruction.

8. The system according to claim 7, wherein,
the computer is further configured to receive the connection management operation instruction of the wireless data card sent by a user, and send the connection management operation instruction of the wireless data card to the installed wireless data card driver with the connection management function through wireless data service function.

9. A wireless data card, comprising a storing module and a wireless data card board side control module, wherein,
the storing module is configured to store a wireless data card driver with connection management function; and
the wireless data card board side control module is configured to when the wireless data card is connected with a computer, install the wireless data card driver with the connection management function in the storing module into the computer, and interact with the wireless data card driver with the connection management function installed on a computer side.

10. The wireless data card according to claim 9, wherein,
the wireless data card board side control module is configured to interact with the wireless data card driver with the connection management function installed on the computer side by the following mode: receiving a connection management instruction of the wireless data card sent by the wireless data card driver with the connection management function installed on the computer side, and controlling the wireless data card to perform an operation according to the received instruction.
